# EUROPÄISCHE PATENTSCHRIFT

(11) **EP 3 605 253 B1**
(45) Veröffentlichungstag und Bekanntmachung des Hinweises auf die Patenterteilung: **10.05.2023**
(21) Anmeldenummer: 18187021.3
(22) Anmeldetag: 02.08.2018
(51) Int. Cl.: G05B 19/406, H04L 9/32, G06F 21/44, G06F 21/33

(54) **AUTOMATISIERTE PUBLIC KEY INFRASTRUCTURE INITIALISIERUNG**
AUTOMATED PUBLIC KEY INFRASTRUCTURE INITIALISATION
INITIALISATION AUTOMATISÉE DES INFRASTRUCTURES À CLÉ PUBLIQUE

(43) Veröffentlichungstag der Anmeldung: 05.02.2020
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(56) Entgegenhaltungen:
- EP-A1- 3 264 208
- EP-A1- 3 402 152

## Beschreibung

Die Erfindung betrifft ein Verfahren zur Initialisierung eines als Operator Station ausgebildeten Servers in einer technischen Anlage, insbesondere Fertigungs- oder Prozessanlage, wobei die technische Anlage wenigstens einen als Engineering Station ausgebildeten Server und wenigstens eine Zertifizierungsstelle zur Ausstellung von Zertifikaten aufweist, nach Anspruch 1. Außerdem betrifft die Erfindung Operator Station Server einer technischen Anlage nach Anspruch 7 und eine technische Anlage, insbesondere Fertigungs- oder Prozessanlage, nach Anspruch 8.

Entsprechend der Rolle eines Operator Station Servers (OS-Servers) einer technischen Anlage sind eine Vielzahl von Zertifikaten für den Betrieb notwendig. Dabei handelt es sich beispielsweise um folgende Zertifikate:
- OPC UA (Open Platform Communications Unified Architecture) Zertifikate für die Kommunikation mit einem Fremdsystem über eine OPC UA Verbindung,
- TLS (Transport Layer Security) Zertifikate für das Bedienen und Beobachten mittels einer Webverbindung,
- weitere Zertifikate, z.B. für die verschlüsselte Kommunikation der Operator Station Server in einem Verbund (bei verteilten Prozessabbildern).

Die Rolle ist bei/nach der Installation eines Operator Station Servers nicht klar, da diese projektabhängig ist. Zudem kann sich die Rolle während eines Lebenszyklus des Operator Station Servers ändern. Dies gilt auch für die für die Ausführung der Rolle erforderlichen Zertifikate.

Neben den Zertifikaten für den jeweiligen Operator Station Server selbst sollen auf diesem auch die Daten (die im Standard RFC5280 als sogenannte "trust chains" bezeichnet werden) hinterlegt werden, die der Operator Station Server (OS-Server) für die Validierung der Zertifikate seiner Kommunikationspartner benötigt. Beispielsweise umfassen diese Daten für ein für den OS-Server OS1 ausgestelltes Zertifikat cert(OS1) folgende Zertifikate:
- cert(Issuing CA1)
- cert(Intermediate CA1)
- cert(Intermediate CA1(i))
- cert(Root_CA)

Dabei ist "Issuing CA1" die sogenannte "Issuing Certification Authority", die das Zertifikat cert(OS1) ausgestellt hat. Intermediate CA1(1) ist die sogenannte "Intermediate Certification Authority", die das Zertifikat cert(Issuing CA1) ausgestellt hat oder mit anderen Worten die "Issuing CA1" signiert hat.

Intermediate CA1(i) für 2 <i <n ist für einen ganzzahligen Wert n (>2) die sogenannte "Intermediate Certification Authority", die das Zertifikat cert(CA1(i-1)) ausgestellt hat oder mit anderen Worten die "Intermediate CA1(i-1)" signiert hat. "Intermediate CA1(n) = Root CA1" ist die vertrauenswürdige Root CA, die das Zertifikat cert(Intermediate CA1(n-1)) ausgestellt hat oder mit anderen Worten die "Intermediate CA1(n-1)" signiert hat.

Die Certification Authority muss sicher aufbewahrt werden, offline sein und darf/sollte nur zwecks der Ausstellung der Zertifikate für andere untergeordnete Certification Authorities eingeschaltet werden.

Eine gegenseitige Zertifikatsvalidierung ist ein standardmäßiger Bestandteil der Kommunikation unter Verwendung von Protokollen zur sicheren Kommunikation. Beispielsweise wird der erste Schritt bei einer TLSgeschützten Kommunikation durch den sogenannten TLS-Handshake repräsentiert, bei dem die Kommunikationspartner ihre Zertifikate gegenseitig validieren. Erst wenn die Zertifikatsvalidierung erfolgreich war, kommt die eigentliche TLS-geschützte Kommunikation zustande.

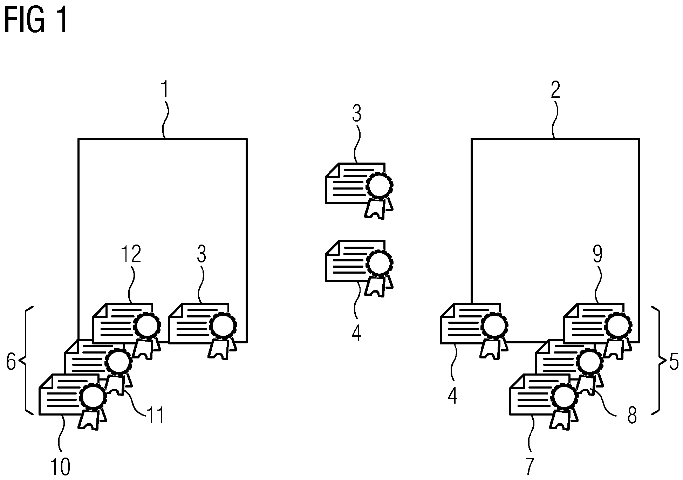

Die FIG 1 veranschaulicht, wie die für die sichere Kommunikation zwischen einem ersten OS-Server 1 und einem zweiten OS-Server 2 notwendigen Zertifikate und Trust Chains gemäß dem Stand der Technik zwischen den beiden Kommunikationspartnern 1, 2 manuell verteilt werden. Diese Daten können von einem dazu berechtigten User bei den einer entsprechenden Certification Authority (hier nicht dargestellt) beantragt werden und (z.B. in Form einer pem-Datei) importiert werden.

Um hervorzuheben, dass es dabei um dedizierte Zertifikate zu einem dedizierten Verwendungszweck geht, werden die für die beteiligten OS-Server 1, 2 ausgestellten Zertifikate 3, 4 als cert(OS1Enc) und cert(OS2Enc) bezeichnet. Dabei ist das exemplarisch als "Enc" bezeichnete Protokoll ein dediziertes Protokoll für eine sichere Kommunikation.

Dies bedeutet insbesondere, dass die beiden OS-Server 1, 2 für weitere sichere Anwendungen, die sie nutzen möchten, weitere Zertifikate samt der Trust Chains ihrer Kommunikationspartner benötigen.

Die FIG 1 veranschaulicht den zertifikatsbasierten Ablauf einer initialen Authentifizierung zwischen den beiden OS-Servern 1, 2. In einem ersten Schritt sendet der OS-Server 1 sein für die Nutzung des sicheren Protokolls (das hier als "Enc" bezeichnet wird) bestimmtes Zertifikat 3 (cert(OS1Enc)) an den OS-Server 2, der den ersten OS-Server 1 anschließend validiert. Dabei wird die im Zertifikat 3 (cert(OS1Enc)) mitgelieferte Trust Chain mit der im zweiten OS-Server 2 bereits hinterlegten Trust Chain 5 abgeglichen. Nur wenn der Abgleich erfolgreich war, wird der Ablauf fortgesetzt. Die Trust Chain 5 auf dem zweiten Operator Station Server 2 umfasst folgende Zertifikate, deren Funktion an sich bekannt ist und auf deren Funktionsweise daher nicht näher eingegangen wird:
- Issuing-Zertifikat 7
- Intermediate-Zertifikat 8
- Wurzelzertifikat 9

Dann überträgt der zweite OS-Server 2 sein für die Nutzung des sicheren Protokolls "Enc" bestimmtes Zertifikat 4 (cert(OS2Enc)) an den ersten OS-Server 1, der den zweiten OS-Server 2 anschließend mithilfe einer auf dem ersten OS-Server 1 hinterlegten Trust Chain 6 validiert. Die Trust Chain 6 auf dem ersten Operator Station Server 1 umfasst die folgenden Zertifikate, deren Funktion an sich bekannt ist und auf deren Funktionsweise daher nicht näher eingegangen wird:
- Issuing-Zertifikat 10
- Intermediate-Zertifikat 11
- Wurzelzertifikat 12

Da es im Hinblick auf Security (aufgrund des sogenannten Minimalitätsprinzips) empfehlenswert ist, dediziert Zertifikate pro Verwendungszweck bzw. Kommunikationsprotokoll zu vergeben, werden auf den OS-Servern 1, 2, die jeweils drei verschiedene sichere Protokolle bei der Kommunikation mit drei verschiedenen Partnern nutzen, folgende Zertifikate manuell installiert:
- Drei Zertifikate für die OS-Server 1,2 selbst für die drei verschiedenen Verwendungszwecke;
- Mindestens zwei CA-Zertifikate (d.h. mindestens das Zertifikat der Issuing CA und das Zertifikat der übergeordneten Root-CA) pro Kommunikationspartner, d.h. mindestens 6 Zertifikate der relevanten Certification Authorities.

Stand heute werden deshalb während der Installation eines Operator Station Servers alle möglicherweise benötigten Zertifikate des OS-Servers selbst sowie alle CA-Zertifikate, die Bestandteile der Trust Chains seiner Kommunikationspartner bilden, manuell mit installiert bzw. im Lebenszyklus sukzessive manuell hinzugefügt. Dadurch verfügen die OS-Server in der Regel über zahlreiche Zertifikate, die sie ggf. nicht benötigen.

Dies führt zu vielen Nachteilen. An der Stelle seien insbesondere die folgenden Nachteile, die eine Verfügbarkeit der technischen Anlage beeinträchtigen können, erwähnt:
Ein erster Nachteil kann wie folgt beschrieben werden: Werden alle auf einem OS-Server hinterlegten Zertifikate unter Verwendung eines Standardmechanismus auf ihr Ablaufdatum überwacht, so wird für jedes Zertifikat, das in Kürze abläuft, ein Vorgang zur Zertifikatserneuerung angestoßen, der eine bidirektionale Kommunikation zwischen dem betroffenen OS-Server und einer lokalen Registration Authority sowie eine bidirektionale Kommunikation zwischen der lokalen Registration Authority und der zuständigen Certification Authority erfordert. Dieser Vorgang ist insgesamt sehr kommunikationsintensiv und sollte demnach nur für die Erneuerung der wirklich erforderlichen Zertifikaten angestoßen werden.

Zu einem weiteren Nachteil kommt es im folgenden Szenario: Muss die Certification Authority, die das Zertifikat eines OS-Servers ausgestellt hat, aufgrund einer Kompromittierung oder weil sie nicht alle erforderlichen Anforderungen erfüllt, durch eine andere ersetzt werden, so muss das o.g. Zertifikat revoziert und durch ein anderes ersetzt werden. Auch die dessen Kommunikationspartnern vorliegenden Trust Chains zu diesem Zertifikat werden Stand heute aufwändig manuell durch die erneuerten Zertifikate ersetzt, wobei versehentliche oder sogar vorsätzliche Fehler möglich sind.

In der EP 3 264 208 A1 ist ein Verfahren zum Aktualisieren von Prozessobjekten eines in einem Engineering-System hinterlegten Automatisierungsprojekt offenbart.

Die EP 3 402 152 A1 offenbart ein Verfahren zur Authentifizierung von Geräten und/oder Applikationen in einem Leitsystem für eine technische Anlage, wobei das Leitsystem wenigstens einen lokalen Registrierungsdienst und wenigstens ein Software-Inventar aufweist.

Der Erfindung liegt die Aufgabe zugrunde, ein Verfahren zur Initialisierung eines als Operator Station ausgebildeten Servers in einer technischen Anlage, insbesondere Fertigungs- oder Prozessanlage, anzugeben, das eine Verwaltung der in der technischen Anlage verwendeten Zertifikate vereinfacht und ausfallsicherer gestaltet.

Diese Aufgabe wird gelöst durch ein Verfahren zur Initialisierung eines als Operator Station ausgebildeten Servers in einer technischen Anlage, insbesondere Fertigungs- oder Prozessanlage, nach Anspruch 1. Zudem wird die Aufgabe gelöst durch einen Operator Station Server einer technischen Anlage nach Anspruch 7 und eine technische Anlage, insbesondere Fertigungs- oder Prozessanlage, nach Anspruch 8. Vorteilhafte Weiterbildungen ergeben sich aus den abhängigen Ansprüchen.

Bei einem Verfahren zur Initialisierung eines als Operator Station ausgebildeten Servers in einer technischen Anlage der eingangs beschriebenen Art wird die Aufgabe erfindungsgemäß durch die folgenden Verfahrensschritte gelöst:
a) Herstellung einer Verbindung des Engineering Station Servers zu dem Operator Station Server;
b) Installation einer für den Engineering Station Server gültigen Trust Chain auf dem Operator Station Server;
c) Installation einer für den Operator Station Server gültigen Trust Chain auf dem Engineering Station Server;
d) Übertragung eines Validierungszertifikats des Engineering Station Servers an den Operator Station Server, damit der Operator Station Server den Engineering Station Server mittels der zuvor installierten entsprechenden Trust Chain validieren kann;
e) Übertragung eines Validierungszertifikats des Operator Station Servers an den Engineering Station Server, damit der Engineering Station Server den Operator Station Server mittels der zuvor installierten entsprechenden Trust Chain validieren kann;
f) Übertragung von Konfigurationsinformationen von dem Engineering Station Server an einen auf dem Operator Station Server implementierten Zertifizierungsservice, wobei die Konfigurationsinformationen von einer Rolle des Operator Station Servers in der technischen Anlage abhängen und Informationen darüber umfassen, welche Zertifikate der Zertifizierungsservice des Operator Station Servers von der Zertifizierungsstelle der technischen Anlage angefordert werden müssen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Unter einem "Engineering Station Server" wird vorliegend ein Server verstanden, der dazu ausgebildet ist, verschiedene Hardware- und Software-Projekte (Engineering-Projekte) für ein Prozessleitsystem einer technischen Anlage zu erstellen, verwalten, archivieren und dokumentieren. Unter einem Engineering-Projekt wird dabei in diesem Zusammenhang eine Automatisierungsaufgabe für einen Teil eine technische Anlage (oder für die gesamte Anlage) verstanden. Beispielsweise kann es sich dabei um die Vorgänge "Beobachten, Bedienen, Verändern etc." handeln. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

In einem Engineering Station Server wird erfindungsgemäß nach einer anfänglichen gegenseitigen Verifizierung ein installierter Operator Station Server in die Hardwarekonfiguration des Engineering Station Servers aufgenommen und parametriert. Die Verifizierung erfolgt in an sich bekannter Art und Weise mittels eines sogenannten Handshake-Verfahrens. Bei diesem werden u.a. sogenannte Trust Chains ausgetauscht, die auch als "Chain of Trust" bezeichnet werden und eine Validierung eines Geräts (in diesem Fall eines Servers) mittels einer Nachverfolgbarkeit der für das jeweilige Gerät ausgestellten Zertifikate bis zu einem übergeordneten Wurzelzertifikat erlauben (vgl. auch die Erläuterungen zum Stand der Technik).

Infolgedessen kann der Engineering Station Server eine Verbindung mit dem Operator Station Server aufbauen, um ihm eine Projektzugehörigkeit festzulegen. Damit kann dieser Operator Station Server nicht durch einen anderen Engineering Station Server genutzt werden.

Das erfindungsgemäße Verfahren sieht es auf besonders vorteilhafte Weise vor, im Rahmen des anfänglichen Engineerings der technischen Anlage gleich festzulegen, welche Zertifikate (und ggf. Trust Chains) von dem Operation Station Server abhängig von dessen Rolle in der technischen Anlage benötigt werden. Diese Information wird einem in den Operator Station Server integrierten Zertifizierungsservice übermittelt, welcher sich dann eigenständig um die Zertifikatsanforderung bei einer Zertifizierungsstelle der technischen Anlage kümmert.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats kann in der Regel mittels kryptografischer Verfahren verifiziert werden.

Die Zertifizierungsstelle der technischen Anlage stellt die (digitalen) Zertifikate heraus (Bereitstellung/Zuweisung) und signiert sie mit ihrem eigenen Geheimschlüssel (Private Key), den sie niemandem mitteilt. Die Zertifizierungsstelle bildet den Kern einer Public-Key-Infrastruktur (PKI) der technischen Anlage. Sie wird auch als Certification Authority (CA) bezeichnet.

Durch das erfindungsgemäße Verfahren wird erreicht, dass auf einem Operator Station Server letztendlich nur die Zertifikate installiert sind, die auch tatsächlich für den Betrieb benötigt werden. Auch eine Zertifikatserneuerung gestaltet sich unter den durch die Erfindung geschaffenen Randbedingungen besonders effizient. Sie wird nämlich stets nur für die Zertifikate angestoßen, die tatsächlich benötigt werden, wodurch negative Seiteneffekte verhindert werden. Es kann eine deutliche Reduzierung der zertifikatsmanagementbezogenen Fehlkonfigurationen und somit ein fundierter Beitrag zum störungsfreien Anlagenbetrieb erreicht werden.

Bei einer vorteilhaften Weiterbildung der Erfindung ist zwischen dem Zertifizierungsservice des Operator Station Servers und der Zertifizierungsstelle wenigstens ein Registrierungsdienst der technischen Anlage dazwischengeschaltet.

Üblicherweise wird die automatisierte Verwaltung von operativen Zertifikaten im Anlagenkontext unter Verwendung eines Standardprotokolls, beispielsweise des Certificate Management Protokolls (CMP, gemäß RFC 4210), realisiert. Dabei fordern die Geräte und Applikationen die erforderlichen operativen Zertifikate situationsbedingt von einem (lokalen) Registrierungsdienst, einer sogenannten Local Registration Authority (LRA), an.

Dabei senden die Geräte und Applikationen eine Anfrage an den lokalen Registrierungsdienst, den sogenannten Certificate Signing Request (CSR). Der lokale Registrierungsdienst prüft die Anforderung, indem er zuerst eine Signatur, mit der die Anforderung signiert ist, auf Gültigkeit überprüft. Anschließend prüft er, ob ein Gerätezertifikat, eine Seriennummer und ggf. weitere Identifikationsmerkmale der Geräte bzw. der Applikationen in einem Software-Inventar des Leitsystems der technischen Anlage, dem sogenannten Inventory, hinterlegt ist. Im Falle einer erfolgreichen Prüfung wird die Anforderung an die sogenannte Certification Authority (CA) weitergeleitet, die ein Zertifikat für das Gerät bzw. die Applikation ausstellt.

Die von dem Engineering Station Server an einen auf dem Operator Station Server implementierten Zertifizierungsservice übertragenen Konfigurationsinformationen können Informationen darüber umfassen, bei welchem Registrierungsdienst der technischen Anlage die Zertifikate angefordert werden müssen. Dabei ist zu beachten, dass diverse in verschiedenen Anlagenteilen installierten Registrierungsdienste die Zertifikatsanträge an eine zentrale Registration Authority (RA) weiterleiten können, die diese prüft und an eine Certification Authority (CA) bzw. eine von mehreren Certification Authorities weiterleitet.

Ist eine Anlage nicht sehr groß und nicht zu stark segmentiert, so ist in der Regel ein einziger Registrierungsdienst anstelle mehrerer Registrierungsdienste und einer Registration Authority ausreichend. Dieser nimmt dann diverse Zertifikatsanträge entgegen, prüft diese und leitet sie - im Falle einer erfolgreichen Prüfung - an die Certification Authority weiter. Aus Redundanzgründen und topologischen Gründen können in einer technischen Anlage mehrere Certification Authorities zur Verfügung stehen, so dass der Registrierungsdienst nach bestimmten Kriterien entscheiden kann, an welche Certification Authority er die Zertifikatsanträge weiterleitet.

Besonders bevorzugt werden nach der initialen Parametrierung des Operation Station Servers Konfigurationsinformationen von dem Engineering Station Server an den auf dem Operator Station Server implementierten Zertifizierungsservice übertragen, wobei die Konfigurationsinformationen von einer Rolle des Operator Station Servers in der technischen Anlage abhängen und Informationen darüber umfassen, welche Zertifikate der Zertifizierungsservice des Operator Station Servers von dem Operator Station Server wieder entfernen muss. Der Zertifizierungsservice kümmert sich dabei auch darum, dass die überflüssigen Zertifikate (sowie die Trust Chains) auf dem Operator Station Server wieder gelöscht werden.

Im Rahmen einer vorteilhaften Weiterbildung der Erfindung übermittelt der Engineering Station Server die an den auf dem Operator Station Server implementierten Zertifizierungsservice übertragenen Konfigurationsinformationen auch an den wenigstens einen Registrierungsdienst der technischen Anlage. Dadurch wird erreicht, dass der Registrierungsdienst zu einem späteren Zeitpunkt nur dann einem weiteren, zusätzlichen Operator Station Server eine Kommunikation mit dem (ersten) Operator Station Server erlaubt, wenn diese Operation Station Server aufgrund der durch den Engineering Station Server vorgenommenen Projektierung miteinander kommunizieren dürfen.

Dabei kann der Registrierungsdienst, wenn der zusätzliche Operator Station Server eine Verbindung zu dem Registrierungsdienst herstellt, um sich in die technische Anlage zu integrieren, stellvertretend für einen Zertifizierungsservice des zusätzlichen Operator Station Servers die benötigten Zertifikate von der Zertifizierungsstelle der technischen Anlage anfordern. Mit anderen Worten ausgedrückt: Kommt ein neuer Operator Station Server hinzu, müssen der oder die bestehenden Operator Station Server nicht durch das Engineering konfiguriert werden, da der neue Operator Station Server sich bei den bestehenden Operator Station Servern anmeldet.

Die Aufgabe wird zudem gelöst durch einen Operator Station Server einer technischen Anlage, der dazu ausgebildet und vorgesehen ist, die Verfahrensansprüche a bis f wie zuvor erläutert auszuführen.

Außerdem wird die Aufgabe gelöst durch eine technische Anlage, insbesondere Fertigungs- oder Prozessanlage, die wenigstens einen Engineering Station Server, wenigstens einen Operator Station Server und wenigstens eine Zertifizierungsstelle umfasst, wobei der Operator Station Server wie zuvor erläutert ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird. Es zeigt:
- FIG 1: ein TLS-Handshake Verfahren nach dem Stand der Technik;
- FIG 2: ein Leitsystem einer technischen Anlag ein einem Prinzipschaubild; und
- FIG 3: ein Ablaufdiagramm einer initialen Zertifikatsvergabe und einer Zertifikatserneuerung.

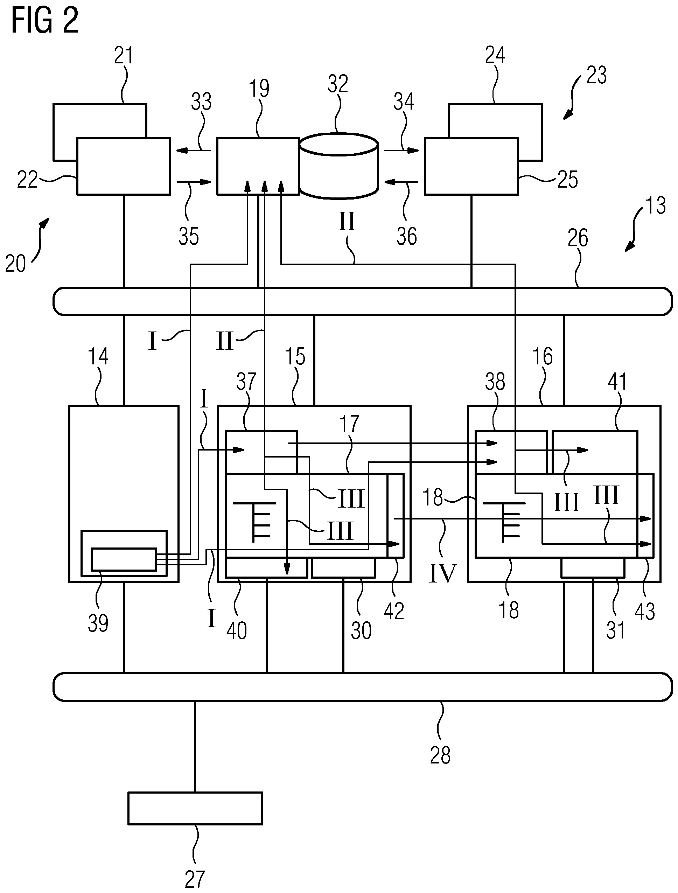

In FIG 2 ist ein erfindungsgemäßes Leitsystem 13 einer als verfahrenstechnischen Anlage ausgebildeten technischen Anlage dargestellt. Das Leitsystem 13 umfasst einen Engineering Station Server 14, einen ersten Operator Station Server 15 und einen zweiten Operator Station Server 16. Jeder der beiden Operator Station Server 15, 16 weist jeweils ein Prozessdatenarchiv 17, 18 auf.

Das Leitsystem 13 weist zudem einen Registrierungsdienst 19 und eine erste Zertifizierungsstelle 20 sowie eine zweite Zertifizierungsstelle 23 auf. Die erste Zertifizierungsstelle 20 umfasst eine Wurzelzertifizierungsstelle 21 (Root CA) und eine Zertifikatsausgabestelle 22 (Issuing CA). Die zweite Zertifizierungsstelle 23 umfasst ebenfalls eine Wurzelzertifizierungsstelle 24 (Root CA) und eine Zertifikatsausgabestelle 25 (Issuing CA). Der Registrierungsdienst 19 weist ein Inventar 32 zum Hinterlegen von Kommunikationsbeziehungen und Informationen über bereits ausgestellte Zertifikate auf. Der Registrierungsdienst 19 beantragt, stellvertretend für die Operator Station Server 15, 16 Zertifikate bei einer der beiden Zertifizierungsstellen 20, 23. Hierzu sendet er sogenannte Certificate Signing Requests 33, 34. Als Antwort auf diese Anträge erhält er (im Erfolgsfall) die beantragten Zertifikate 35, 36.

Der Engineering Station Server 14, der erste Operator Station Server 15, der zweite Operator Station Server 16, der Registrierungsdienst 19 und die erste und zweite Zertifizierungsstelle 20, 23 stehen über einen Terminalbus 26 miteinander in Verbindung. Ein Benutzer bzw. Client (nicht dargestellt) kann sich mittels des Terminalbusses 26 mit den zuvor genannten Komponenten in Verbindung setzen. Der Terminalbus 26 kann, ohne sich darauf zu beschränken, beispielsweise als Industrial Ethernet ausgebildet sein.

An die beiden Operator Station Server 15, 16 sowie den Engineering Station Server 14 ist ein Gerät 27 mittels eines Anlagenbusses 28 angeschlossen. Bei dem angeschlossenen Gerät 27 kann es sich dabei alternativ auch um eine Applikation, insbesondere Webapplikation, handeln. Im Rahmen der Erfindung kann eine beliebige Zahl an Geräten und/oder Applikationen angeschlossen sein. Der Anlagenbus 28 kann, ohne sich darauf zu beschränken, beispielsweise als Industrial Ethernet ausgebildet sein. Das Gerät 27 kann wiederum mit einer beliebigen Anzahl an Subsystemen (nicht dargestellt) verbunden sein. Zur Verbindung mit dem Gerät 27 weisen die beiden Operator Station Server 15, 16 jeweils passende Treiber 30, 31 auf.

Auf beiden Operator Station Servern 15, 16 ist jeweils ein Zertifizierungsservice 37, 38 implementiert, dessen Funktion im Folgenden näher erläutert wird.

Nach dem (in FIG 1 erläuterten) Aufbau einer sicheren Kommunikation zwischen dem Engineering Station Server 14 und den beiden Operator Station Servern 15, 16 wird auf dem Engineering Station Server 14 in einem Hardwarekonfigurationsservice 39 die Parametrierung der beiden Operator Station Server 15, 16 vorgenommen.

Der erste Operator Station Server 15 erhält die Domänenfunktion bzw. Rolle "OPC Driver" 40 für die Kommunikation mit einem dedizierten Fremdsystem via OPC und soll hierfür das passende Zertifikat sowie die Trust Chain des anvisierten Kommunikationspartners von dem in der Parametrierung vorgegebenen Registrierungsdienst 19 beziehen.

Der zweite Operator Station Server 16 soll über eine Internetschnittstelle über eine Visualisierung bedient und beobachtet werden können, und bekommt hierfür die Domänenfunktion bzw. Rolle "Visualization Service (Web)" 41. Er soll entsprechend für die verschlüsselte Kommunikation von dem in der Parametrierung vorgegebenen Registrierungsdienst 19 das passende Zertifikat sowie die Trust Chain des anvisierten Kommunikationspartners beziehen.

Die vorgenommene Projektierung in dem Hardwarekonfigurationsservice 39 des Engineering Station Servers 14 wird in einem ersten Schritt I in den jeweiligen Zertifizierungsdienst 37, 38 der beiden Operator Station Server 15, 16 sowie in den Registrierungsdienst 19 übertragen. Jeder Zertifizierungsdienst 37, 38 nimmt in einem zweiten Schritt II gemäß Projektierung mit dem zuständigen Registrierungsdienst 19 Kontakt auf, um die benötigten Zertifikate sowie die Trust Chains der Kommunikationspartner zu beziehen.

Wurde jeweils die benötigten (und nur diese) Zertifikate bezogen, werden diese in einem dritten Schritt III durch den jeweiligen Zertifizierungsdienst 37, 38 der beiden Operator Station Server 15, 16 den unterschiedlichen Domänenfunktionen 40, 41 übergeben. Im Rahmen desselben Schritts III werden auch die Zertifikate sowie die Trust Chains der deaktivierten Domänenfunktionen entfernt (wenn z.B. durch ein Projektierungsupdate eine Domänenfunktion nicht weiter benötigt wird, ist auch das jeweilige Zertifikat obsolet). Das hierfür benötigte Zertifikat wird ebenfalls in dem dritten Schritt III von dem Registrierungsdienst 19 übertragen.

Für eine Verbundkommunikation zwischen den einzelnen Operator Station Servern 15, 16 verfügen die beiden Operator Station Server 15, 16 jeweils über einen Distributionsdienst 42, 43. Nimmt nun in einem vierten Schritt IV ein Operator Station Server 15, 16 Kontakt zu einem anderen Operator Station Server 15, 16 auf, so wird durch den Zertifizierungsdienst 37, 38 auch das jeweilige Zertifikat an den Kommunikationspartner übergeben, so dass auf Grundlage einer Trust Chain ein Vertrauensverhältnis aufgebaut werden kann, bevor die tatsächliche verfahrenstechnische Interaktion zwischen den Operator Station Servern 15, 16 etabliert wird (vgl. Ausführungen zu FIG 1).

Bei Bedarf kann eine Erweiterung um einen zusätzlichen Operator Station Server auch dynamisch zur Laufzeit der technischen Anlage stattfinden. Kommt ein neuer Operator Station Server hinzu, müssen die bestehenden Operator Station Server 15, 16 nicht durch den Engineering Station Server 14 konfiguriert werden, da der neue Operator Station Server sich bei den bestehenden Operator Station Server 15, 16 (wie zuvor erläutert) anmelden kann. Kommt der neue Operator Station Server hinzu, so meldet sich dieser über einen integrierten Zertifizierungsservice bei einer dem Registrierungsdienst 19. Der Registrierungsdienst 19, dem eine vertrauenswürdige Trust Chain zu einem Zertifikat des neuen Operator Station Server vorliegt, validiert das Zertifikat und passt im Falle der erfolgreichen Validierung die in dem Inventar 32 hinterlegten Kommunikationsbeziehungen entsprechend an. Das Verteilen bzw. Entfernen von Trust Chains erfolgt dann ebenfalls gemäß den angepassten Kommunikationsbeziehungen.

Durch die beschriebene Erfindung wird ermöglicht, dass die unterschiedlichen Operator Station Server 15, 16 projektiert und die für ihre Rolle notwendigen Zertifikate sowie die für die sichere Kommunikation erforderlichen Trust Chains der Kommunikationspartner selbst und voll automatisch über den Registrierungsdienst 19 beantragen können.

Während der Registrierungsdienst 19 jeden Zertifikatsantrag nach einer umfassenden Validierung an die Zertifizierungsstelle 20, 23 weiterleitet, kann er dies bei den Trust Chains-Anforderungen vorteilhafterweise auch nur bei Bedarf durchführen. Denn wenn er bereits eine Trust Chain von einer Zertifizierungsstelle 20, 23 bezogen hat, hat er diese in dem Inventar 32 abgelegt und kann sie anschließend allen vertrauenswürdigen Bedarfsträgern, die diese Trust Chain für die Zertifikatsvalidierung benötigen, nach einer entsprechenden Prüfung zur Verfügung stellen.

Durch die Erfindung wird zusammengefasst erreicht, dass auf allen Operator Station 15, 16 Servern im gesamten Lebenszyklus letztendlich nur die Zertifikate installiert sind, die auch tatsächlich für den Betrieb benötigt werden.

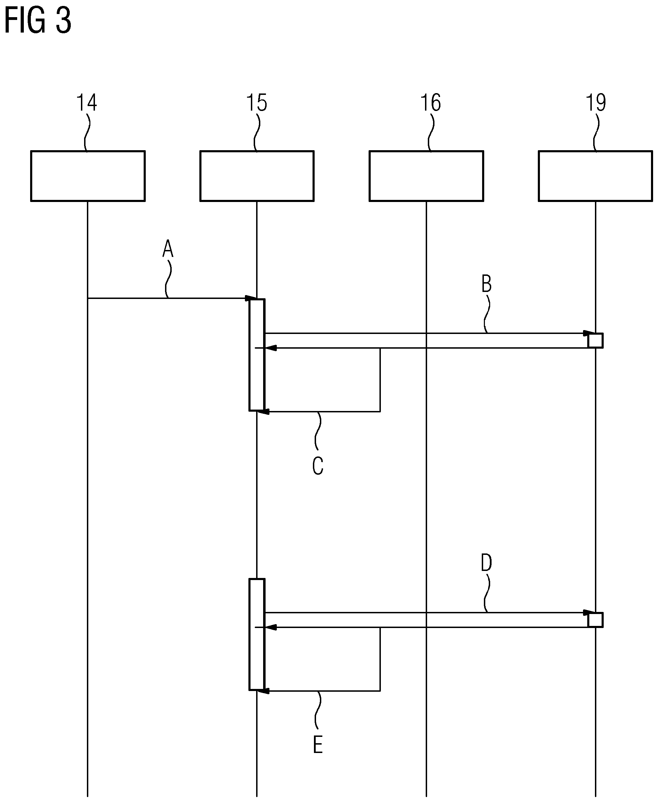

Da der Registrierungsdienst 19 Verbindungen zu den projektierten (und im Inventar 32 hinterlegten) Zertifikatsausgabestellen 22, 25 hat, kann er sofort reagieren, falls eine Zertifikatsausgabestelle 22, 25 durch eine andere ersetzt wird. Dadurch werden alle von dieser Zertifikatsausgabestellen 22, 25 ausgestellten Zertifikate und die zugehörigen Trust Chains von dem Registrierungsdienst 19 automatisch identifiziert. Anschließend kann der Registrierungsdienst 19 einen Vorgang zur Beantragung neuer Zertifikate und Trust Chains bei den neuen Zertifikatsausgabestellen 22, 25 anstoßen und die neuen Zertifikate und die Trust Chains auf die Bedarfsträger verteilen, bevor sie den Vorgang zur Revokation und dem Entfernen der nicht mehr gültigen bzw. nicht mehr benötigten Zertifikate und Trust Chains ausgeführt haben. FIG 3 stellt eine Zertifikatsausgabe in einem Ablaufdiagramm beispielhaft dar. In einem ersten Schritt wird In einem initialen und ersten Schritt A werden die benötigten Konfigurationsinformationen für den ersten Operation Station Server 15 und den zweiten Operator Station Server 16 individuell durch den Engineering Station Server 143 zusammengestellt und auf die Operator Station Server 15, 16 übertragen. Daraufhin beantragt der Zertifizierungsdienst 37, 38 in einem zweiten Schritt B jeweils auf jedem Operator Station Server 15, 16 bei dem definierten Registrierungsdienst 19 die individuell benötigten Zertifikate und installiert diese in einem dritten Schritt C.

Zu beachten ist, dass der Registrierungsdienst 19 die Zertifikatsanträge nach einer umfassenden Prüfung an eine dedizierte Zertifizierungsstelle 20, 23 weiterleitet. Die Entscheidung, an welche Zertifizierungsstelle 20, 23 ein bestimmter Zertifikatsantrag weitergeleitet werden soll, wird entweder von einer Software der Zertifizierungsstellen 20, 23 oder von dem zuständigen Benutzer (z.B. LRA-Super User) getroffen.

Danach beginnt die "Zertifikatewartung". Immer dann, wenn ein Zertifikat vor dem Ablauf steht, fordert der Zertifizierungsdienst 37, 38 in einem optionalen vierten Schritt D ein aktualisiertes Zertifikat selbstständig von dem Registrierungsdienst 19 an, das dann anschließend in einem fünften Schritt E installiert wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Initialisierung eines als Operator Station ausgebildeten Servers (15, 16) in einer technischen Anlage, insbesondere Fertigungs- oder Prozessanlage, wobei die technische Anlage wenigstens einen als Engineering Station ausgebildeten Server (14) und wenigstens eine Zertifizierungsstelle (20, 23) zur Ausstellung von Zertifikaten aufweist, das Verfahren umfassend:
a) Herstellung einer Verbindung des Engineering Station Servers (14) zu dem Operator Station Server (15, 16) ;
b) Installation einer für den Engineering Station Server (14) gültigen Trust Chain (5, 6) auf dem Operator Station Server (15, 16);
c) Installation einer für den Operator Station Server (15, 16) gültigen Trust Chain (5, 6) auf dem Engineering Station Server (14);
d) Übertragung eines Validierungszertifikats des Engineering Station Servers (14) an den Operator Station Server (15, 16), damit der Operator Station Server (15, 16) den Engineering Station Server (14) mittels der zuvor installierten entsprechenden Trust Chain (5, 6) validieren kann;
e) Übertragung eines Validierungszertifikats des Operator Station Servers (15, 16) an den Engineering Station Server (14), damit der Engineering Station Server (14) den Operator Station Server (15, 16) mittels der zuvor installierten entsprechenden Trust Chain (5, 6) validieren kann;
f) Übertragung von Konfigurationsinformationen von dem Engineering Station Server (14) an einen auf dem Operator Station Server (15, 16) implementierten Zertifizierungsservice (37, 38), wobei die Konfigurationsinformationen von einer Rolle des Operator Station Servers (15, 16) in der technischen Anlage abhängen und Informationen darüber umfassen, welche Zertifikate der Zertifizierungsservice (37, 38) des Operator Station Servers (15, 16) von der Zertifizierungsstelle (20, 23) der technischen Anlage angefordert werden müssen.

2. Verfahren nach Anspruch 1, bei dem zwischen dem Zertifizierungsservice (37, 38) des Operator Station Servers (15, 16) und der Zertifizierungsstelle (20, 23) wenigstens ein Registrierungsdienst (19) der technischen Anlage dazwischengeschaltet ist, der stellvertretend für den Zertifizierungsservice (37, 38) des Operator Station Servers (15, 16) die benötigten Zertifikate von der Zertifizierungsstelle (20, 23) der technischen Anlage anfordert.

3. Verfahren nach Anspruch 2, bei dem die von dem Engineering Station Server (14) an einen auf dem Operator Station Server (15, 16) implementierten Zertifizierungsservice (37, 38) übertragenen Konfigurationsinformationen Informationen darüber umfassen, bei welchem Registrierungsdienst (19) der technischen Anlage die Zertifikate angefordert werden müssen.

4. Verfahren nach einem der vorangegangenen Ansprüche, bei dem nach dem Verfahrensschritt f gemäß Anspruch 1 Konfigurationsinformationen von dem Engineering Station Server (14) an den auf dem Operator Station Server (15, 16) implementierten Zertifizierungsservice (37, 38) übertragen werden, wobei die Konfigurationsinformationen von einer Rolle des Operator Station Servers (15, 16) in der technischen Anlage abhängen und Informationen darüber umfassen, welche Zertifikate der Zertifizierungsservice (37, 38) des Operator Station Servers (15, 16) von dem Operator Station Server (15, 16) wieder entfernen muss.

5. Verfahren nach einem der Ansprüche 2 bis 4, bei dem der Engineering Station Server (14) die an den auf dem Operator Station Server (15, 16) implementierten Zertifizierungsservice (37, 38) übertragenen Konfigurationsinformationen auch an den wenigstens einen Registrierungsdienst (19) der technischen Anlage übermittelt.

6. Verfahren nach Anspruch 5, bei dem ein zusätzlicher Operator Station Server (15, 16) eine Verbindung zu dem wenigstens einen Registrierungsdienst (19) herstellt, um sich in die technische Anlage zu integrieren, wobei der Registrierungsdienst (19) stellvertretend für einen Zertifizierungsservice (37, 38) des zusätzlichen Operator Station Servers (15, 16) die benötigten Zertifikate von der Zertifizierungsstelle (20, 23) der technischen Anlage anfordert.

7. Operator Station Server (15, 16) einer technischen Anlage, der dazu ausgebildet und vorgesehen ist, die Verfahrensschritte a, b und d bis f gemäß Anspruch 1 auszuführen.

8. Technische Anlage, insbesondere Fertigungs- oder Prozessanlage, die wenigstens einen Engineering Station Server (14), wenigstens einen Operator Station Server (15, 16) und wenigstens eine Zertifizierungsstelle (20, 23) umfasst, wobei der Operator Station Server (15, 16) gemäß Anspruch 7 ausgebildet ist.

## Claims

1. Method for initialising a server (15, 16) embodied as an operator station in a technical installation, in particular production or process installation, wherein the technical installation has at least one server (14) embodied as an engineering station and at least one certification authority (20, 23) for issuing certificates, the method comprising the following steps:
a) Establishment of a connection from the engineering station server (14) to the operator station server (15, 16);
b) Installation of a trust chain (5, 6) valid for the engineering station server (14) on the operator station server (15, 16);
c) Installation of a trust chain (5, 6) valid for the operator station server (15, 16) on the engineering station server (14) ;
d) Transmission of a validation certificate of the engineering station server (14) to the operator station server (15, 16) so that the operator station server (15, 16) can validate the engineering station server (14) by means of the corresponding trust chain (5, 6) previously installed;
e) Transmission of a validation certificate of the operator station server (15, 16) to the engineering station server (14) so that the engineering station server (14) can validate the operator station server (15, 16) by means of the corresponding trust chain (5, 6) previously installed;
f) Transmission of configuration information from the engineering station server (14) to a certification service (37, 38) implemented on the operator station server (15, 16), wherein the configuration information depends on a role of the operator station server (15, 16) in the technical installation and comprises information as to which certificates of the certification service (37, 38) of the operator station server (15, 16) must be requested from the certification authority (20, 23) of the technical installation.

2. Method according to claim 1, in which at least one registration service (19) of the technical installation is interposed between the certification service (37, 38) of the operator station server (15, 16) and the certification authority (20, 23) and, in place of the certification service (37, 38) of the operator station server (15, 16), requests the required certificates from the certification authority (20, 23) of the technical installation.

3. Method according to claim 2, in which the configuration information transmitted from the engineering station server (14) to a certification service (37, 38) implemented on the operator station server (15, 16) comprises information indicating from which registration service (19) of the technical installation the certificates must be requested.

4. Method according to one of the preceding claims, in which according to the method step f according to claim 1, configuration information is transmitted from the engineering station server (14) to the certification service (37, 38) implemented on the operator station server (15, 16), wherein the configuration information depends on a role of the operator station server (15, 16) in the technical installation and comprises information as to which certificates the certification service (37, 38) of the operator station server (15, 16) must remove again from the operator station server (15, 16).

5. Method according to one of claims 2 to 4, in which the configuration information transmitted to the certification service (37, 38) implemented on the operator station server (15, 16) is also transmitted by the engineering station server (14) to the at least one registration service (19) of the technical installation.

6. Method according to claim 5, in which an additional operator station server (15, 16) establishes a connection to the at least one registration service (19) in order to integrate itself into the technical installation, wherein the registration service (19), in place of a certification service (37, 38) of the additional operator station server (15, 16), requests the required certificates from the certification authority (20, 23) of the technical installation.

7. Operator station server (15, 16) of a technical installation, which is embodied and provided to carry out the method steps a, b and d to f according to claim 1.

8. Technical installation, in particular production or process installation, comprising at least one engineering station server (14), at least one operator station server (15, 16) and at least one certification authority (20, 23), wherein the operator station server (15, 16) is embodied according to claim 7.

## Revendications

1. Procédé d'initialisation d'un serveur (15, 16) constitué en operator station dans une installation technique, notamment dans une installation de fabrication ou de processus, dans lequel l'installation technique a au moins un serveur (14) constitué en engineering station et au moins un poste (20, 23) de certification pour l'établissement de certificats, le procédé comprenant :
a) la production d'une liaison du serveur (14) d'engineering station au serveur (15, 16) d'operator station ;
b) l'installation sur le serveur (15, 16) d'operator station d'une trust chain (5, 6) valable pour le serveur (14) d'engineering station ;
c) l'installation sur le serveur (14) d'engineering station d'une trust chain (5, 6) valable pour le serveur (15, 16) d'operator station ;
d) la transmission d'un certificat de validation du serveur (14) d'engineering station au serveur (15, 16) d'operator station, afin que le serveur (15, 16) d'operator station puisse valider le serveur (14) d'engineering station au moyen de la trust chain (5, 6) correspondante installée auparavant ;
e) la transmission d'un certificat de validation du serveur (15, 16) d'operator station au serveur (14) d'engineering station, afin que le serveur (14) d'engineering station puisse valider le serveur (15, 16) d'operator station au moyen de la trust chain (5, 6) correspondante installée auparavant ;
f) la transmission d'informations de configuration du serveur (14) d'engineering station à un service (37, 38) de certification mis en oeuvre sur le serveur (15, 16) d'operator station, dans lequel les informations de configuration dépendent d'un rôle du serveur (15, 16) d'operator station dans l'installation technique et comprennent des informations sur les certificats du service (37, 38) de certification du serveur (15, 16) d'operator station, qui doivent être exigés par le poste (20, 23) de certification de l'installation technique.

2. Procédé suivant la revendication 1, dans lequel, entre le service (37, 38) de certification du serveur (15, 16) d'operator station et le poste (20, 23) de certification, est monté au moins un service (19) d'enregistrement de l'installation technique, qui, en représentant le service (37, 38) de certification du serveur (15, 16) d'operator station, exige les certificats, dont a besoin le poste (20, 23) de certification de l'installation technique.

3. Procédé suivant la revendication 2, dans lequel des informations de configuration, transmises par le serveur (14) d'engineering station à un service (37, 38) de certification mis en oeuvre sur le serveur (15, 16) d'operator station, comprennent des informations sur le service (19) de certification de l'installation technique auprès duquel les certificats doivent être demandés.

4. Procédé suivant l'une des revendications précédentes, dans lequel, après le stade f du procédé suivant la revendication 1, on transmet des informations de configuration du serveur (14) d'engineering station au service (37, 38) de certification mis en oeuvre sur le serveur (15, 16) d'operator station, dans lequel les informations de configuration dépendent d'un rôle du serveur (15, 16) d'operator station dans l'installation technique et comprennent des informations sur les certificats que le service (37, 38) de certification du serveur (15, 16) d'operator station doit retirer du serveur (15, 16) d'operator station.

5. Procédé suivant l'une des revendications 2 à 4, dans lequel le serveur (14) d'engineering station transmet également au au moins un service (19) d'enregistrement de l'installation technique les informations de configuration transmises au service (37, 38) de certification mis en oeuvre sur le serveur (15, 16) d'operator station.

6. Procédé suivant la revendication 5, dans lequel un serveur (15, 16) d'operator station supplémentaire produit une liaison avec le au moins un service (19) d'enregistrement pour s'intégrer dans l'installation technique, dans lequel le service (19) d'enregistrement, en représentant un service (37, 38) de certification du serveur (15, 16) d'operator station supplémentaire, exige les certificats, dont a besoin le poste (20, 23) de certification de l'installation technique.

7. Serveur (15, 16) d'operator station d'une installation technique, qui est constitué et prévu pour effectuer les stades a, b et d à f de procédé suivant la revendication 1.

8. Installation technique, en particulier installation de fabrication ou de processus, qui comprend au moins un serveur (14) d'engineering station, au moins un serveur (15, 16) d'operator station et au moins un poste (20, 23) de certification, dans lequel le serveur (15, 16) d'operator station est constitué suivant la revendication 7.
